# EUROPÄISCHE PATENTSCHRIFT

(11) **EP 2 622 724 B1**
(45) Veröffentlichungstag und Bekanntmachung des Hinweises auf die Patenterteilung: **10.09.2014**
(21) Anmeldenummer: 11770034.4
(22) Anmeldetag: 30.09.2011
(51) Int. Cl.: H02M 7/00, H01R 13/70

(54) **WECHSELRICHTER**
INVERTER
ONDULEUR

(30) Priorität: 30.09.2010 AT 16392010
(43) Veröffentlichungstag der Anmeldung: 07.08.2013
(73) Patentinhaber: Fronius International GmbH, 4643 Pettenbach (AT)
(72) Erfinder: STOCKINGER, Walter, A-4542 Nussbach (AT); HUMER, Michael, A-4731 Prambachkirchen (AT); PESTIC, Slavica, A-4050 Traun (AT); WOLFSCHLUCKNER, Markus, A-4724 Neukirchen am Walde (AT)
(74) Vertreter: Heger, Georg
(86) Internationale Anmeldenummer: PCT/AT2011/000405
(87) Internationale Veröffentlichungsnummer: WO 2012/040761

(56) Entgegenhaltungen:
- WO-A1-2010/091445
- DE-A1-102005 061 532
- US-A1- 2006 077 599

## Beschreibung

Die Erfindung betrifft einen Wechselrichter mit einer Halterung mit daran angeordnetem Anschlusselement und einen daran steckbaren Elektronikteil, wobei das Anschlusselement einen Anschlussblock zum Verbinden von zumindest einem Solarmodul und zumindest einen Anschluss für den Elektronikteil umfasst, wobei am Elektronikteil korrespondierende Anschlussbuchsen zur steckbaren Verbindung mit dem zumindest einen Anschluss angeordnet sind, und mit einem DC-Trennelement.

Ein Wechselrichter dient dazu die Gleichspannung einer Energiequelle, bzw. von Solarmodulen in eine sinusförmige Wechselspannung umzuwandeln, welche in ein Versorgungsnetz eingespeist oder direkt zur Versorgung von Verbrauchern verwendet werden kann. Dazu sind Wechselrichter bekannt, die eine Halterung mit einem angeordneten Anschlusselement und einen daran steckbaren Elektronikteil umfassen, die gemeinsam den sogenannten steckbaren Wechselrichter ausbilden. Das Anschlusselement umfasst Anschlussblöcke zum Verbinden von zumindest einem Solarmodul und zumindest einen Anschluss für den Elektronikteil. Am Elektronikteil sind korrespondierende Anschlussbuchsen zur steckbaren Verbindung mit den Anschlüssen angeordnet. Weiters umfasst der Wechselrichter ein DC-Trennelement, das dem Elektronikteil zugeordnet ist.

Zur Verringerung insbesondere von Leitungsverlusten werden immer höhere Eingangsgleichspannungen, beispielsweise bis zu 1500 Volt und darüber, eingesetzt, indem eine entsprechend hohe Anzahl an Photovoltaikmodulen in Serie geschaltet wird.

Bei Servicearbeiten an Photovoltaikanlagen ist es erforderlich, den Wechselrichter zumindest von der Gleichspannungsseite - also dem Eingang an der Halterung - zu trennen, sodass die Arbeiten am Elektronikteil spannungsfrei durchgeführt werden können oder der Elektronikteil von der Halterung abgenommen werden kann. Üblicherweise erfolgt die vom Bediener manuell durchgeführte Trennung, wenn die Zuleitungen der Gleichspannungsseite Strom führen, sodass leistungsfähige DC-Trennelemente für die Trennung erforderlich sind.

Ein derartiges DC-Trennelement ist im Übergangsbereich zwischen den Anschlussbuchsen am Elektronikteil und den darin angeordneten Leistungsteil-Funktionsbaugruppen, wie beispielsweise einem DC-DC-Wandler, einem DC-AC-Wandler, usw. angeordnet, und wird üblicherweise über entsprechend dimensionierte Verbindungsleitungen manuell verdrahtet. Durch Aufstecken bzw. Verbinden des Elektronikteils mit der Halterung werden die Anschlüsse in der Halterung mit den Anschlussbuchsen am Elektronikteil verbunden, sodass die von den Solarmodulen gelieferte Energie über die Anschlussbuchsen an das DC-Trennelement und an die daran angeschlossenen Funktionsbaugruppen im Elektronikteil geleitet wird. Durch Betätigung, also Deaktivierung des DC-Trennelements wird der Elektronikteil stromlos geschaltet und es können entsprechende Servicearbeiten durchgeführt oder der Elektronikteil vom Halteteil abgenommen werden.

Nachteilig ist hierbei, dass bei einem derartig aus zwei Teilen bestehenden steckbaren Wechselrichter das DC-Trennelement im Elektronikteil angeordnet ist. Dadurch können zwar durch Deaktivierung des DC-Trennelements die einzelnen Komponenten - wie der Leistungsteil - stromlos geschaltet werden, jedoch liegt beim Trennen der Halterung und des Elektronikteils an der elektrischen Verbindungsstelle zwischen den ineinander greifenden Anschlüssen und den Anschlussbuchsen, nach wie vor die von den Solarmodulen erzeugte Spannung an.

Ebenso ist nachteilig, dass die Verbindungsleitungen jeweils an Klemmleisten oder dergl. mit der Gleichspannungsseite und dem Elektronikteil verbunden sind. Beispielsweise kann ein Anschlusselement verwendet werden, welches zumindest einen Anschlussblock für die Gleichspannungsseite aufweist und mit Anschlüssen für den Elektronikteil ausgebildet ist. Dabei ist der Anschlussblock meist als Stecker oder Buchse ausgebildet, wobei die Zuleitungen der Photovoltaikanlage ebenfalls einen Stecker oder Buchse aufweisen. Ebenso kann der Anschluss für den Elektronikteil als Stecker oder Buchse ausgebildet sein. Aus diesen externen und im Gerät internen Verbindungsleitungen und den Übergängen zwischen Stecker(n) und Buchse(n) resultiert eine Vielzahl von Kontaktstellen bis zum Leistungsteil, welche jeweils einen Übergangswiderstand darstellen und somit Verluste verursachen.

Die US 2006/0077599 A1 betrifft eine Schutzeinrichtung für einen Wechselrichter zur Vermeidung oder Reduzierung eines Lichtbogens während eines Trennvorgangs von laststromführenden Steckkontakten, indem eine Schutzabdeckung vorgesehen ist, welche Zusatzkontakte aufweist, die so angeordnet sind, dass beim Abziehen der Schutzabdeckung die Kontakte der Schutzabdeckung von den Zusatzkontakten getrennt werden und dadurch der Laststrom reduziert wird.

Die WO 2010/091445 A1 offenbart eine Halterung für einen Wechselrichter ohne DC-Trennelement.

Schließlich zeigt die DE 10 2005 061 532 A1 eine Lasttrennschaltung zum stromlosen Verbinden und Trennen von elektrischen Kontakten, bei der parallel zu einem Halbleiterschaltelement ein Schalter angeordnet ist, welcher einen Hauptkontakt und einen Hilfskontakt umfasst, die in entsprechender Weise gekoppelt sind, sodass eine Lichtbogenbildung sicher verhindert wird.

Die Aufgabe der vorliegenden Erfindung besteht in der Reduktion der Kontaktstellen bei Verwendung eines DC-Trennelements in einem steckbaren Wechselrichter.

Gelöst wird die erfindungsgemäße Aufgabe durch einen oben genannten Wechselrichter, bei dem das Anschlusselement durch eine Baugruppe gebildet ist, in welcher Baugruppe an einer Seite der Anschlussblock zum Verbinden von zumindest einem Solarmodul und an einer weiteren Seite der zumindest eine Anschluss zur steckbaren Verbindung mit dem Elektronikteil und zwischen diesen Seiten das DC-Trennelement integriert sind, weiters ein Betätigungselement des DC-Trennelements zum mechanischen oder elektronischen Aktivieren und Deaktivieren der Verbindung zwischen dem Anschlussblock und dem zumindest einen Anschluss außerhalb der Baugruppe angeordnet ist, wobei ein erster Kontakt des DC-Trennelements direkt als eine Kontaktstelle des Anschlussblocks und ein zweiter Kontakt des DC-Trennelements direkt als eine Kontaktstelle des zumindest einen Anschlusses ausgebildet ist.

Vorteilhaft ist hierbei, dass die Steckverbindung zum Elektronikteil beim Trennen des Elektronikteils bereits spannungslos ist. Auch resultiert ein geringer Platzbedarf, sodass die Baugröße des Wechselrichters minimiert wird. Ebenso ist kein Montageaufwand und Verdrahtungsaufwand für die DC-Trennelemente erforderlich, wodurch Verdrahtungsfehler ausgeschlossen werden können und die Prozesssicherheit bei der Fertigung erhöht wird. Von Vorteil ist auch die Reduktion von Verbindungsstellen und Übergangswiderständen, wodurch Leitungsverluste vermieden bzw. reduziert werden. Zusätzlich werden auch Kabelkosten eingespart, welche ansonsten für die Verdrahtung erforderlich wären.

Dadurch, dass ein erster Kontakt des DC-Trennelements als eine Kontaktstelle des Anschlussblocks, ein zweiter Kontakt des Trennelements als eine Kontaktstelle des zumindest einen Anschlusses ausgebildet ist und die Kontaktstellen so angeordnet sind, dass der Abstand der Kontaktstellen an die Baugröße der Trennelemente abgestimmt ist, kann in vorteilhafter Weise die Baugröße des Gehäuses des Anschlusselements minimal gehalten werden.

Vorteilhafterweise ist das Betätigungselement des DC-Trennelements seitlich und allenfalls unten an der Baugruppe angeordnet.

Von Vorteil ist auch, dass der zumindest eine Anschluss zur steckbaren Verbindung mit dem Elektronikteil und/oder der Anschlussblock zum Verbinden von zumindest von einem Solarmodul durch einen ersten Teil einer Steckverbindung ausgebildet ist, wodurch Halterung und Wechselrichter getrennt montiert werden können und unabhängig voneinander sind. Zusätzlich wird eine einfache, steckbare Montage der Zuleitungen an den Anschlussblock, beispielsweise durch handelsübliche Multikontaktstecker, erreicht.

Wenn das Betätigungselement durch einen Verriegelungsmechanismus mit der Steckverbindung gekoppelt ist, kann erreicht werden, dass die Steckverbindung nur getrennt werden kann, wenn das Betätigungselement in einer AUS-Stellung ist.

Das Betätigungselement ist vorzugsweise zur Bedienung von außen an einer Außenwand des Wechselrichters angeordnet und ausgebildet.

Die vorliegende Erfindung wird anhand der beigefügten, schematischen Zeichnungen näher erläutert. Darin zeigen:
Fig. 1 eine schematische Übersichtsdarstellung eines Wechselrichters einer Photovoltaikanlage;
Fig. 2 eine erste schematische Ausführung der Anordnung des erfindungsgemäßen Anschlusselements im Wechselrichter;
Fig. 3 eine zweite schematische Ausführung der Anordnung des erfindungsgemäßen Anschlusselements im Wechselrichter;
Fig. 4 eine dritte schematische Ausführung der Anordnung des erfindungsgemäßen Anschlusselements im Wechselrichter;
Fig. 5 eine detaillierte, schematische Darstellung des Anschlusselements;
Fig. 6 eine erste schematische, dreidimensionale Darstellung einer Ausführungsform des Anschlusselements; und
Fig. 7 eine zweite schematische, dreidimensionale Darstellung einer Ausführungsform des Anschlusselements.

Einführend wird festgehalten, dass gleiche Teile des Ausführungsbeispiels mit gleichen Bezugszeichen versehen werden.

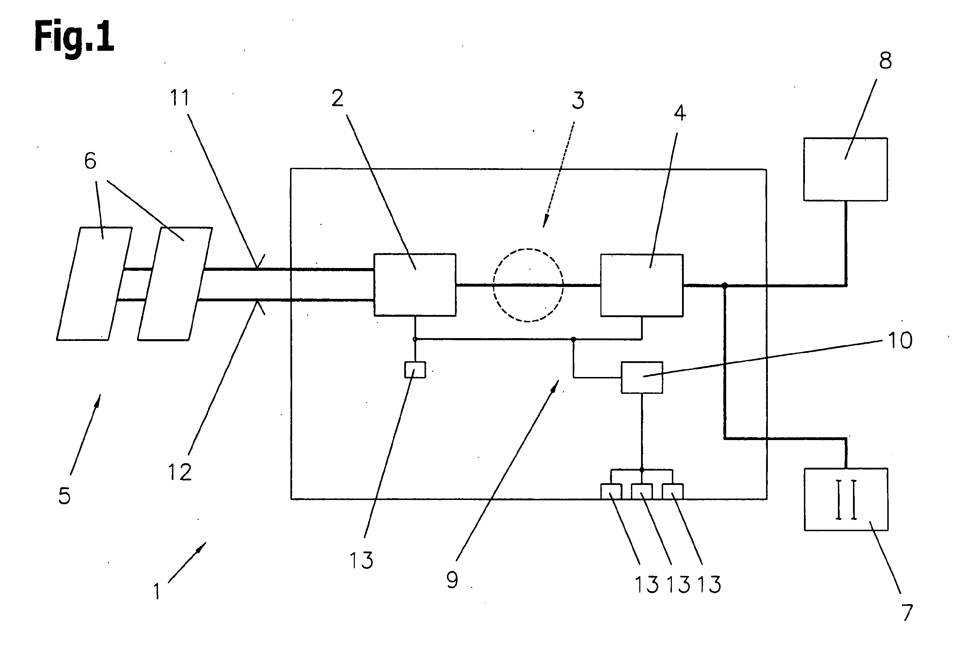

In Fig. 1 ist ein Aufbau eines bekannten Wechselrichters 1, im Detail eines HF-Wechselrichters, dargestellt. Da die einzelnen Komponenten bzw. Baugruppen und Funktionen von Wechselrichtern 1 bereits aus dem Stand der Technik bekannt sind, wird auf diese nachstehend nicht im Detail eingegangen.

Der Wechselrichter 1 weist zumindest einen Eingangs-DC-DC-Wandler 2, einen Zwischenkreis 3 und einen Ausgangs-DC-AC-Wandler 4 auf. Am Eingangs-DC-DC-Wandler 2 ist eine Energiequelle 5 angeschlossen, welche bevorzugt aus einem oder mehreren parallel und/oder seriell zueinander geschalteten Photovoltaikmodulen 6 gebildet werden. Der Wechselrichter 1 und die Photovolteikmodule 6 werden auch als Photovoltaikanlage bzw. als PV-Anlage bezeichnet. Der Ausgang des Wechselrichters 1 bzw. des Ausgangs-D-C-AC-Wandlers 4 kann mit einem Versorgungsnetz 7, wie einem öffentlichen oder privaten Wechselspannungsnetz oder einem Mehr-Phasennetz, und/oder mit zumindest einem elektrischen Verbraucher 8 verbunden sein. Beispielsweise wird ein Verbraucher 8 durch einen Motor, Kühlschrank, Funkgerät usw. gebildet. Ebenso kann der Verbraucher 8 auch eine Hausversorgung darstellen. Die einzelnen Komponenten des Wechselrichters 1, können über einen Datenbus 9 mit einer Steuervorrichtung 10 verbunden sein.

Bevorzugt dient ein derartiger Wechselrichter 1 als so genannter netzgekoppelter Wechselrichter 1, dessen Energiemanagement daraufhin optimiert ist, möglichst viel Energie in das Versorgungsnetz 7 einzuspeisen. Wie aus dem Stand der Technik bekannt, werden die Verbraucher 8 über das Versorgungsnetz 7 versorgt. Selbstverständlich können auch mehrere parallel geschaltete Wechselrichter 1 eingesetzt werden. Dadurch kann mehr Energie zum Betrieb der Verbraucher 8 bereitgestellt werden.

Diese Energie wird von der Energiequelle 5 bzw. den Photovoltaikmodulen 6 in Form einer Gleichspannung geliefert, welche über zwei Anschlussleitungen 11, 12 mit dem Wechselrichter 1 verbunden ist.

Die Steuervorrichtung 10 des Wechselrichters 1 ist beispielsweise durch einen Mikroprozessor, Mikrocontroller oder Rechner gebildet. Über die Steuervorrichtung 10 kann eine entsprechende Steuerung der einzelnen Komponenten des Wechselrichters 1, wie dem Eingangs-DC-DC-Wandler 2 oder dem Ausgangs-DC-AC-Wandler 4, insbesondere der darin angeordneten Schaltelemente, vorgenommen werden. In der Steuervorrichtung 10 sind hierzu die einzelnen Regel- bzw. Steuerabläufe durch entsprechende Software-Programme und/oder Daten bzw. Kennlinien gespeichert.

Des Weiteren sind mit der Steuervorrichtung 10 Bedienelemente 13 verbunden, durch welche der Benutzer beispielsweise den Wechselrichter 1 konfigurieren und/oder Betriebszustände oder Parameter anzeigen - beispielsweise mittels Leuchtdioden - und einstellen kann. Die Bedienelemente 13 sind dabei beispielsweise über den Datenbus 9 oder direkt mit der Steuervorrichtung 10 verbunden. Derartige Bedienelemente 13 sind beispielsweise an einer Front des Wechselrichters 1 angeordnet, sodass eine Bedienung von außen möglich ist. Ebenso können die Bedienelemente 13 auch direkt an Baugruppen und/oder Modulen innerhalb des Wechselrichters 1 angeordnet sein.

Dabei kann der Wechselrichter 1 eine Halterung 14 mit einem angeordneten Anschlusselement 15 und einen daran steckbaren Elektronikteil 16 umfassen, die gemeinsam den so genannten steckbaren Wechselrichter 1 ausbilden.

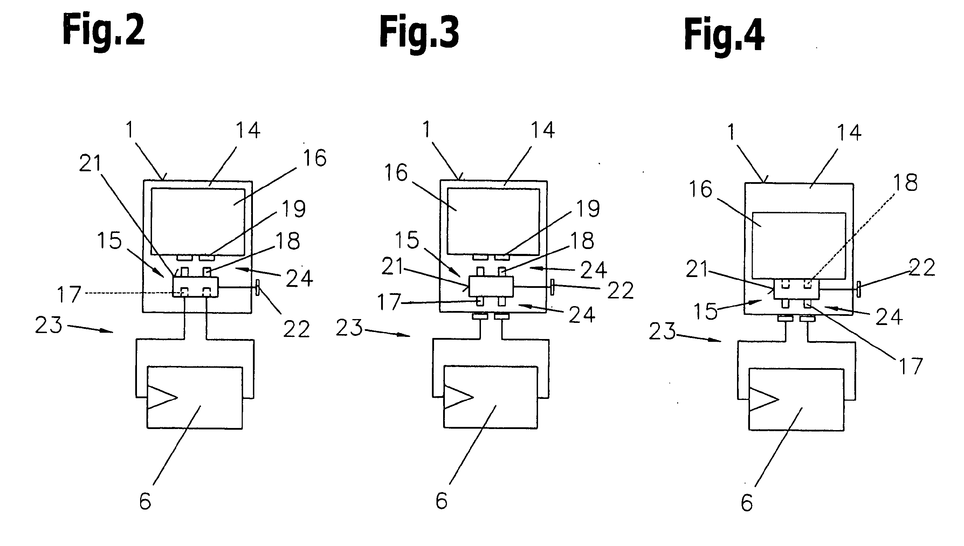

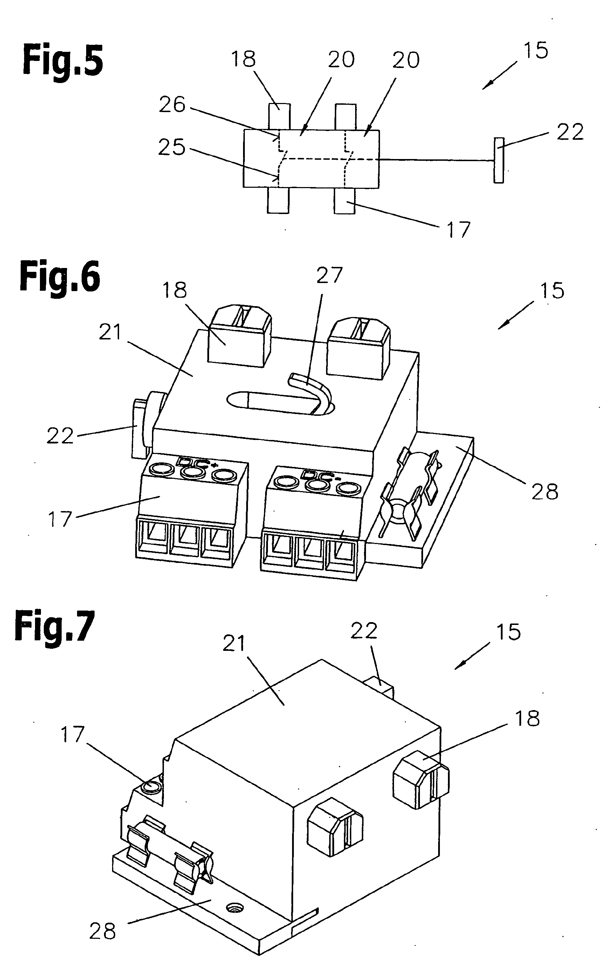

Ein derartiger Wechselrichter 1 ist im Detail im Folgenden in Zusammenschau der Fig. 2 bis 7 beschrieben.

Das Anschlusselement 15 umfasst zumindest einen Anschlussblock 17 zum Verbinden von zumindest einem Solarmodul 6 und zumindest einen Anschluss 18 für den Elektronikteil 16. Am Elektronikteil 16 sind korrespondierende Anschlussbuchsen 19 zur steckbaren Verbindung mit den Anschlüssen 18 angeordnet. Weiters umfasst der Wechselrichter 1 ein DC-Trennelement 20, welches dem Elektronikteil 16 zugeordnet ist. Ein derartiges DC-Trennelement 20 ist im Übergangsbereich zwischen den Anschlussbuchsen 19 am Elektronikteil 16 und den darin angeordneten Leistungsteil-Funktionsbaugruppen, wie beispielsweise dem DC-DC-Wandler, dem DC-AC-Wandler, usw. angeordnet.

Erfindungsgemäß ist nun vorgesehen, die Verluste und Kontaktstellen zu reduzieren, indem zumindest ein DC-Trennelement 20 in einer Baugruppe 21 des Anschlusselements 15 angeordnet wird. Das Anschlusselement 15 ist entsprechend durch eine Baugruppe 21 gebildet, in dem zumindest an einer Seite der Anschlussblock 17 und der zumindest eine Anschluss 18 zur steckbaren Verbindung mit dem Elektronikteil 16 und zwischen diesen zumindest ein DC-Trennelement 20 angeordnet sind, und ein Betätigungselement 22 des DC-Trennelements 20 zum mechanischen oder elektronischen Aktivieren und Deaktivieren der Verbindung zwischen Anschlussblock 17 und Anschluss 18 außerhalb der Baugruppe 21 angeordnet ist. Dadurch werden die Kontakte des DC-Trennelements 20 im Wesentlichen direkt mit den Zuleitungen 23 der Gleichspannungsseite und dem Elektronikteil 16 verbunden. Das Anschlusselement 15 wird also durch eine Baugruppe 21 gebildet, in welcher der Anschlussblock 17, die DC-Trennelemente 20 und die Anschlüsse 18 integriert sind und die Anschlüsse 18 zur streckbaren Verbindung mit den Anschlussbuchsen 19 ausgebildet sind.

Somit wird das Zusammenfügen der elektrischen und mechanischen Komponenten vom DC-Trennelement 20 und Anschlussbereich der Solarmodule 6 zu den weiterführenden Funktionsbaugruppen des Wechselrichters 1 ermöglicht.

Wie aus den im Folgenden beschriebenen Varianten ersichtlich, sind die DC-Trennelemente 20 in der Baugruppe 21 integriert, wobei zumindest die Eingangskontakte für die Zuleitungen 23 der Gleichspannungsseite als lösbare Verbindung ausgebildet sind. Das heißt, dass die Zuleitungen 23 an den Anschlussblöcken 17 beispielsweise verschraubt und/oder gesteckt werden. Auch könnten sogenannte Federzugklemmen eingesetzt werden. Damit die Zuleitungen 23 gesteckt werden können, sind die Anschlussblöcke 17 als erster Teil einer Steckverbindung 24 ausgebildet und die Zuleitungen 23 beispielsweise mit gängigen Stecker/Buchsenelementen versehen. Diese Kontaktstelle für die lösbare Verbindung ist dabei direkt in einen ersten Kontakt 25 des DC-Trennelements 20 integriert bzw. der erste Kontakt 25 als Kontaktstelle ausgebildet, sodass lediglich eine Kontaktstelle resultiert und keine Verbindungsleitungen erforderlich sind.

Ebenso weist das Anschlusselement 15 an der Seite des Elektronikteils 16 zumindest eine Kontaktstelle auf, welche als Anschluss 18 für die Funktionsbaugruppen des Elektronikteils - wie den Leistungsteil- ausgebildet ist. Hierbei ist die Kontaktstelle in einem zweiten Kontakt 26 des DC-Trennelements 20 integriert bzw. der zweite Kontakt 26 als Kontaktstelle ausgebildet. Dabei ist die zumindest eine Kontaktstelle entweder direkt mit einer Leiterplatte des Elektronikteils 16 verbunden oder als Steckverbindung 24 ausgebildet.

Somit sind die beispielsweise gegenüberliegend angeordneten Kontaktstellen im Wesentlichen Teil des DC-Trennelements 20. Dementsprechend sind die Kontaktstellen an den Randbereichen der Baugruppe 21 angeordnet, sodass die Zuleitungen 23 und die Ableitungen - im Wesentlichen zum Elektronikteil 16 - mit den Kontaktstellen verbunden werden können. Die DC-Trennelemente 20 sind demnach im Wesentlichen in der Mitte der Baugruppe 21 angeordnet, wobei die Baugruppe 21 auch die Kontaktstellen durch Vorsprünge und/oder Erhöhungen an den Randbereichen umfasst.

Bei einer direkten Verbindung der Kontaktstelle mit der Leiterplatte ist das Anschlusselement 15 vollständig im Elektronikteil 16 integriert, da beispielsweise die zweiten Kontakte 26 der DC-Trennelemente 20 an der Leiterplatte verlötet oder verschraubt sind. Somit bildet die Lötstelle oder die Schraubverbindung 24 die Kontaktstelle. Dementsprechend sind die als Anschlüsse 18 ausgebildeten zweiten Kontakte 26 aus der Baugruppe 21 herausgeführt. Dabei ist der Elektronikteil 16 trotzdem steckbar ausgebildet, wenn der Anschlussblock 17 als Steckverbindung 24 ausgebildet ist. Dementsprechend ist ein erster Teil der Steckverbindung 24 in der Baugruppe 21 angeordnet und der zweite Teil der Steckverbindung 24 an der Halterung 14. Somit wird der Elektronikteil 16 mit dem Anschlusselement 15 an der Halterung 14 befestigt.

Bei der Ausführung als Steckverbindung 24 ist dementsprechend ein erster Teil der Steckverbindung 24, beispielsweise die Kupplung, als Anschlüsse 18 in der Baugruppe 21 des Anschlusselements 15 integriert. Dementsprechend dient die Kupplung als Kontaktstelle und ist beispielsweise als Vorsprung am Rand der Baugruppe 21 angeordnet. Hierbei ist das Anschlusselement 15 beispielsweise an einer Halterung 14 des Wechselrichters 1 befestigt. Entsprechend ist der zweite Teil der Steckverbindung 24 im Elektronikteil 16 integriert. Somit wird die Steckverbindung 24 kontaktiert, wenn der Elektronikteil 16 an der Halterung 14 befestigt wird. Im Detail kann eine derartige Steckverbindung 24, der WO 2010/091445 A1 entnommen werden.

Somit kann der Elektronikteil 16 auf das Anschlusselement 15, welches an der Halterung 14 fixiert ist, gesteckt werden, wobei gleichzeitig der Elektronikteil 16 an der Halterung 14 fixiert wird.

Ebenso kann auch zuerst der Elektronikteil 16 fixiert werden, sodass das Anschlusselement 15 an diesem fixiert wird. Das Anschlusselement 15 ist dabei an die Ausführung der Halterung 14 und des Elektronikteils 16 angepasst. Dementsprechend ist der Anschlussblock 17 und der zumindest eine Anschluss 18 sowie deren Kontaktstellen an der jeweiligen Seite der Baugruppe 21 des Anschlusselements 15 angeordnet. Also entweder an der gleichen Seite, auf gegenüberliegenden Seiten oder an einer Stirnseite und an einer oberen bzw. unteren Seite.

Da die Kontaktstellen und die DC-Trennelemente 20 in der Baugruppe 21 des Anschlusselements 15 integriert sind, entsprechen die Kontaktstellen im Wesentlichen den Kontakten der DC-Trennelemente 20. Auch kann gesagt werden, dass die Kontaktstellen in den Kontakten integriert sind und entsprechend am freien Ende der Kontakte angeordnet sind. Somit sind die Kontakte der DC-Trennelemente 20 vergrößert ausgebildet bzw. an die Abmessungen der Baugruppe 21 des Anschlusselements 15 angepasst, sodass die Kontakte ohne Übergänge und Unterbrechungen an den Rand der Baugruppe 21 geführt sind. Dementsprechend sind die Kontakte auch geformt und die Kontaktstellen ausgebildet. Das heißt, dass die Kontaktstellen für die Zuleitungen 23 beispielsweise als Stecker ausgebildet sind, wobei die Stecker im Anschlussblock 17 integriert sind und die Anschlüsse 18 für den Elektronikteil 16 als Kupplung ausgebildet sind, sodass sowohl für den Anschlussblock 17 als auch für die Anschlüsse 18 ein erster Teil der Steckverbindung 24 gebildet ist.

Die Betätigung der DC-Trennelemente 20 erfolgt bevorzugt über ein Betätigungselement 22, welches außen an der Baugruppe 21 des Anschlusselements 15 angeordnet ist. Wie dargestellt, ist das Betätigungselement 22 beispielsweise seitlich angeordnet, wobei ein einziges Betätigungselement 22 durch eine mechanisch betätigte Welle sämtliche DC-Trennelemente 20 umschalten kann. Dabei ist das Betätigungselement 22 beispielsweise als Druckknopf, als Hebel oder als Drehschalter an der Welle angeordnet, sodass zwischen einer EIN-Stellung und einer AUS-Stellung umgeschaltet werden kann.

Bevorzugt kann das Betätigungselement 22 von außerhalb des Gehäuses des Wechselrichters 1 betätigt werden. Dementsprechend ist beispielsweise das Anschlusselement 15 am Rand des Gehäuses des Wechselrichters 1 positioniert, sodass das Betätigungselement 22 durch eine entsprechende Öffnung im Gehäuse des Wechselrichters 1 betätigt werden kann.

Selbstverständlich kann das Betätigungselement 22 auch elektrisch, beispielsweise mit einem Relais, ausgebildet sein, wobei das Betätigungselement 22 durch einen Taster, Schalter oder integrierten Schaltkreis gebildet ist. Hierbei sind entsprechende Kontakte aus der Baugruppe 21 geführt, welche mit dem Betätigungselement 22 und/oder mit einer Kommunikationsschnittstelle verbunden ist. So ist beispielsweise der Taster im Gehäuse des Wechselrichters integriert, sodass die Bedienung von außen möglich ist.

Die Kommunikationsschnittstelle ermöglicht einen Fernzugriff, zum Beispiel via Internet, auf das Betätigungselement 22. So kann der Elektronikteil 16 in einfacher Weise von der Ferne zu- und abgeschaltet werden, beispielsweise während Netzarbeiten durchgeführt werden. Dementsprechend muss dazu keine Person vor Ort sein.

Mit der Betätigung des Betätigungselements 22 kann auch zusätzlich eine Verriegelung der Steckverbindung 24 erfolgen, sodass die Baugruppe 21 nur gelöst werden kann, wenn sich das Betätigungselement 22 in der AUS-Stellung befindet. Diese Verriegelung erfolgt beispielsweise durch mechanische Komponenten, welche außerhalb der Baugruppe 21 des Anschlusselements 15 angeordnet sind und den Verriegelungsmechanismus bilden und entsprechend den zweiten Teil der Steckverbindung 24 fixieren bzw. lösen. Somit ist das Betätigungselement 22 durch den Verriegelungsmechanismus mit der Steckverbindung 24 gekoppelt. Beispielsweise derart, dass ein Hebel 27 als Verriegelungsmechanismus mit dem Betätigungselement 22 bewegt wird und zum Fixieren bevorzugt beidseitig der Baugruppe 21 in eine Ausnehmung im zweiten Teil der Steckverbindung 24 eingreift. Ebenso kann der Hebel 27 - wie dargestellt - auch oben angeordnet sein, sodass die Fixierung im Wesentlichen durch die im Zentrum der Steckverbindung 24 angeordnete Ausnehmung erfolgt.

Durch einen derart kompakten Aufbau des Anschlusselements 15 kann dieses durch zusätzliche Komponenten ergänzt werden, welche für länderbezogene Normen erforderlich sind. Dazu sind an der Baugruppe Steck- und/oder Kontaktierungsplätze vorgesehen, sodass beispielsweise Erdungs-Sicherungen 28, Überspannungsableiter oder Softerdungen ergänzt werden können und dadurch die Baugruppe 21 erweitert wird. Dementsprechend sind diese direkt mit zumindest einer Kontaktstelle verbunden.
Selbstverständlich kann das Anschlusselement 15 auch Anschlüsse 18 und Anschlussblöcke 17 für die Ausgangsleitungen - also zur Verbindung mit dem Wechselspannungsnetz - umfassen. Auch hierbei können gegebenenfalls Trennelemente angeordnet sein, welche gemeinsam mit den DC-Trennelementen 20 der Eingangsleitungen umgeschaltet werden. Ebenso kann das Anschlusselement 15 neben der Leistungsübertragung auch für Datenübertragungen oder dergl. ausgelegt sein.

Allgemein kann gesagt werden, dass die Anzahl der Anschlussblöcke 17, der Anschlüsse 18 und der DC-Trennelemente 20 an die Leistung des Wechselrichters 1 und an die Konfiguration der Photovoltailanlage angepasst ist. Daraus resultiert die erforderliche Anzahl der Zuleitungen 23. Die Anzahl der DC-Trennelemente 20 entspricht im Wesentlichen der Anzahl der Zuleitungen 23, wobei auch für mehrere Zuleitungen 23 ein gemeinsames DC-Trennelement 20 verwendet werden kann.

## Patentansprüche

1. Wechselrichter (1) mit einer Halterung (14) mit daran angeordneten Anschlusselement (15) und einen daran steckbaren Elektronikteil (16), wobei das Anschlusselement (15) einen Anschlussblock (17) zum Verbinden von zumindest einem Solarmodul (6) und zumindest einen Anschluss (18) für den Elektronikteil (16) umfasst, wobei am Elektronikteil (16) korrespondierende Anschlussbuchsen (19) zur steckbaren Verbindung mit dem zumindest einen Anschluss (18) angeordnet sind, und mit einem DC-Trennelement (20), **dadurch gekennzeichnet, dass** das Anschlusselement (15) durch eine Baugruppe (21) gebildet ist, in welcher Baugruppe (21) an einer Seite der Anschlussblock (17) zum Verbinden von zumindest einem Solarmodul (6) und an einer weiteren Seite der zumindest eine Anschluss (18) zur steckbaren Verbindung mit dem Elektronikteil (16) und zwischen diesen Seiten das DC-Trennelement (20) integriert sind, dass weiters ein Betätigungselement (22) des DC-Trennelements (20) zum mechanischen oder elektronischen Aktivieren und Deaktivieren der Verbindung zwischen dem Anschlussblock (17) und dem zumindest einen Anschluss (18) außerhalb der Baugruppe (21) angeordnet ist, wobei ein erster Kontakt (25) des DC-Trennelements (20) direkt als eine Kontaktstelle des Anschlussblocks (17) und ein zweiter Kontakt (26) des DC-Trennelements (20) direkt als eine Kontaktstelle des zumindest einen Anschlusses (18) ausgebildet ist.

2. Wechselrichter (1) nach Anspruch 1, **dadurch gekennzeichnet, dass** die Kontaktstellen des Anschlussblocks (17) und des zumindest einen Anschlusses (18) so angeordnet sind, dass der Abstand der Kontaktstellen an die Baugröße der DC-Trennelemente (20) abgestimmt ist.

3. Wechselrichter (1) nach Anspruch 1 oder 2, **dadurch gekennzeichnet, dass** das Betätigungselement (22) des DC-Trennelements (20) seitlich an der Baugruppe (21) angeordnet ist.

4. Wechselrichter (1) nach einem der Ansprüche 1 bis 3, **dadurch gekennzeichnet, dass** das Betätigungselement (22) des DC-Trennelements (20) unten an der Baugruppe (21) angeordnet ist.

5. Wechselrichter (1) nach einem der Ansprüche 1 bis 4, **dadurch gekennzeichnet, dass** der zumindest eine Anschluss (18) zur steckbaren Verbindung mit dem Elektronikteil (16) und/oder der Anschlussblock (17) zum Verbinden von zumindest einem Solarmodul (6) durch einen ersten Teil einer Steckverbindung (24) ausgebildet ist.

6. Wechselrichter (1) nach Anspruch 5, **dadurch gekennzeichnet, dass** das Betätigungselement (22) durch einen Verriegelungsmechanismus mit der Steckverbindung (24) gekoppelt ist.

7. Wechselrichter (1) nach einem der Ansprüche 1 bis 6, **dadurch gekennzeichnet, dass** das Betätigungselement (22) zur Bedienung von außen an einer Außenwand des Wechselrichters (1) angeordnet und ausgebildet ist.

## Claims

1. An inverter (1) comprising a fixture (14) with a connector element (15) arranged thereupon and an electronic part (16) which can be plugged into said connector element, the connector element (15) comprising a connector block (17) for connecting to at least one solar module (6), and at least one connector (18) for the electronic part (16), wherein corresponding connector sockets (19) for pluggably connecting to the at least one connector (18) are arranged on the electronic part (16), and with a DC separation element (20), **characterized in that** the connector element (15) is composed of an assembly (21), in which assembly (21) the connector block (17) for connecting to at least one solar module (6) is incorporated in one side and the at least one connector (18) for pluggably connecting to the electronic part (16) is incorporated in another side and the DC separation element (20) is incorporated between these sides, and that further an actuation element (22) of the DC separation element (20) is arranged outside the assembly (21) to mechanically and electronically activate and deactive the connection between the connector block (17) and the at least one connector (18), wherein a first contact (25) of the DC separation element (20) is directly formed as a contact point of the connector block (17) and a second contact (26) of the DC separation element (20) is directly formed as a contact point of the at least one connector (18).

2. An inverter (1) according to claim 1, **characterized in that** the contact points of the connector block (17) and the at least one connector (18) are arranged such that the distance of the contact points is adjusted to the overall size of the DC separtion elements (20).

3. An inverter (1) according to claim 1 or 2, **characterized in that** the actuation element (22) of the DC separation element (20) is laterally arranged on the assembly (21).

4. An inverter (1) according to one of claims 1 to 3, **characterized in that** the actuation element (22) of the DC separation element (20) is arranged at the bottom of the assembly (21).

5. An inverter (1) according to one of claims 1 to 4, **characterized in that** the at least one connector (18) is formed as a pluggable connection to the electronic part (16) and/or the connector block (17) for connecting to the at least one solar module (6) is formed by a first part of a plug-in connection (24).

6. An inverter (1) according to claim 5, **characterized in that** the actuation element (22) is coupled to the plug-in connection (24) by an interlocking mechanism.

7. An inverter (1) according to one of claims 1 to 6, **characterized in that** the actuation element (22) is arranged and formed on an outside wall of the inverter (1) to be operated from outside.

## Revendications

1. Onduleur (1) présentant un support (14) avec un élément de raccordement (15) disposé dessus et une partie électronique (16) enfichable dessus, l'élément de raccordement (15) comportant un bloc de raccordement (17) pour la liaison d'au moins un module solaire (6) et d'au moins un raccord (18) pour la partie électronique (16), des douilles de jonction (19) correspondantes pour la liaison enfichable avec l'au moins un raccord (18) étant disposées sur la partie électronique (18), et avec un élément de séparation de courant continu (20), **caractérisé en ce que** l'élément de raccordement (15) est formé par un ensemble (21), ensemble (21) dans lequel sont intégrés, sur un côté, le bloc de raccordement (17) pour la liaison d'au moins un module solaire (6) et, sur un autre côté, l'au moins un raccord (18) pour la liaison enfichable avec la partie électronique (16) et, entre ces côtés, l'élément de séparation de courant continu (20), **en ce qu'**un élément d'actionnement (22) de l'élément de séparation de courant continu (20) est en outre disposé pour l'activation et la désactivation mécanique ou électronique de la liaison entre le bloc de raccordement (17) et l'au moins un raccord (18) en dehors de l'ensemble (21), un premier contact (25) de l'élément de séparation de courant continu (20) étant réalisé directement comme un point de contact du bloc de raccordement (17) et un second contact (26) de l'élément de séparation de courant continu (20) étant réalisé directement comme un point de contact de l'au moins un raccord (18).

2. Onduleur (1) selon la revendication 1, **caractérisé en ce que** les points de contact du bloc de raccordement (17) et de l'au moins un raccord (18) sont disposés de sorte que la distance entre les points de contact est adaptée à la grandeur structurelle des éléments de séparation de courant continu (20).

3. Onduleur (1) selon la revendication 1 ou 2, **caractérisé en ce que** l'élément d'actionnement (22) de l'élément de séparation de courant continu (20) est disposé latéralement sur l'ensemble (21).

4. Onduleur (1) selon l'une quelconque des revendications 1 à 3, **caractérisé en ce que** l'élément d'actionnement (22) de l'élément de séparation de courant continu (20) est disposé sur le bas de l'ensemble (21).

5. Onduleur (1) selon l'une quelconque des revendications 1 à 4, **caractérisé en ce que** l'au moins un raccord (18) pour la liaison enfichable avec la partie électronique (16) et/ou le bloc de raccordement (17) pour la liaison d'au moins un module solaire (6) est/sont formés par une première partie d'une liaison enfichable (24).

6. Onduleur (1) selon la revendication 5, **caractérisé en ce que** l'élément d'actionnement (22) est couplé par un mécanisme de verrouillage avec la liaison enfichable (24).

7. Onduleur (1) selon l'une quelconque des revendications 1 à 6, **caractérisé en ce que** l'élément d'actionnement (22) est disposé et réalisé pour la commande depuis l'extérieur sur une paroi extérieure de l'onduleur (1).
